## Europäisches Patentamt

## European Patent Office

## Office européen des brevets

(11) Veröffentlichungsnummer: **0 095 693**
**B1**

(12) **EUROPÄISCHE PATENTSCHRIFT**

(45) Veröffentlichungstag der Patentschrift:
**20.04.88**

(51) Int. Cl.⁴: **B 29 C 67/20**

(21) Anmeldenummer: **83105071.1**

(22) Anmeldetag: **21.05.83**

(54) **Vorrichtung zum Ausschäumen von Formen oder Formkörpern.**

(30) Priorität: **01.06.82 DE 3220604**

(43) Veröffentlichungstag der Anmeldung:
**07.12.83 Patentblatt 83/49**

(45) Bekanntmachung des Hinweises auf die Patenterteilung:
**20.04.88 Patentblatt 88/16**

(84) Benannte Vertragsstaaten:
**DE FR GB IT**

(56) Entgegenhaltungen:
**DE - A - 2 257 661**
**DE - A - 2 257 702**
**US - A - 3 439 075**
**US - A - 3 444 279**

(73) Patentinhaber: **Elastogran Polyurethane GmbH,
D-2844 Lemförde (DE)**

(72) Erfinder: **Grosse-Rechtien, Heribert,
Edelweissstrasse 30, D-8170 Bad Toelz (DE)**

(74) Vertreter: **Springer, Hans Jörg, Dr. et al, BASF
Aktiengesellschaft Patentabteilung ZNP -
C 6 Carl-Bosch-Strasse 38, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Ausschäumen von Formen oder Formkörpern gemäss Oberbegriff des Patentanspruchs 1.

Zur Herstellung von Flächenelementen mit einem Kunststoffkern, vorzugsweise einem Polyurethan-Kern, sogenannten Sandwich-Elementen, werden in einer Etagenpresse in Stützrahmen eingefasste Deckschichten mit dem Kunststoffmaterial ausgeschäumt. Das Ausschäumen wird mit Hilfe eines Mischkopfes vorgenommen, in dem die von einer Dosiereinrichtung über Schlauchleitungen zugeführten Kunststoffkomponenten gemischt und das Reaktionsgemisch durch eine Düse ausgetragen wird. Zum Einfahren zwischen die Deckschichten ist der Mischkopf an der Spitze eines Tragearmes befestigt, der in einem Maschinengestell entsprechend den drei Raumkoordinaten bewegbar gelagert ist.

Vor der Etagenpresse muss zum Ein- und Ausfahren des in der Fachpraxis als Lanze bezeichneten Tragearmes ein langer freier Raum, beispielsweise um 15 m Länge bei 12 m tiefen Etagenpressen, freigehalten werden. Für die dabei mitzuführenden, am Maschinengestell angeschlossenen Schlauchleitungen ergeben sich noch wesentlich grössere Längen. Neben dem grossen Platzbedarf ist der Druckverlust in den langen Schlauchleitungen von Nachteil.

Eine in der DE-A-2 257 702 beschriebene Vorrichtung zur diskontinuierlichen Herstellung von Platten aus miteinander reagierenden Kunststoffkomponenten sieht vor, dass ein in eine Hohlform ein- und ausfahrbarer Düsenkopf zusammen mit schlauchartigen Zufuhrleitungen an einem Ende einer mit Laufrollen bestückten Laschenkette befestigt ist, der ein mit einem reversierbaren Antrieb ausgerüstetes Ritzel zugeordnet ist. Nachteilig ist dabei, dass für die Laschenkette ein langgestreckter Speicher vorgesehen werden muss, da sie nicht aufrollbar ist.

Es stellte sich daher die Aufgabe, eine Vorrichtung zum Ausschäumen von Formen oder Formkörpern zu entwickeln, bei der die nachteiligen Baulängen wesentlich verkürzt sind, so dass der Platzbedarf und auch die Druckverluste in den Schlauchleitungen merklich reduziert sind.

Die Lösung der Aufgabe erfolgt erfindungsgemäss mit den Merkmalen aus dem kennzeichnenden Teil des Patentanspruchs 1.

Weitere bevorzugte Ausführungen sind in den Ansprüchen 2 bis 5 beschrieben.

Die Vorrichtung nach der Erfindung ist mit ihren Vorteilen an einem in der Zeichnung schematisch dargestellten Ausführungsbeispiel nachfolgend näher beschrieben.

Es zeigen:

Figur 1 eine Ausschäumvorrichtung nach dem Stand der Technik

Figur 2 die erfindungsgemässe Vorrichtung in einer Seitenansicht, mit Schlauchleitungen und einer Aufrolltrommel dafür

Figur 3 die in Klemmstücken zusammengehaltenen Schlauchleitungen mit Transportketten dafür im Querschnitt

Figur 4 die erfindungsgemässe Vorrichtung in der Draufsicht, mit einer feststehenden Ausgleichstrommel neben der drehbaren Aufrolltrommel

Figur 5a–d einzelne Bewegungsphasen der in der Ausgleichstrommel befindlichen Endabschnitte der abrollenden Schlauchleitungen.

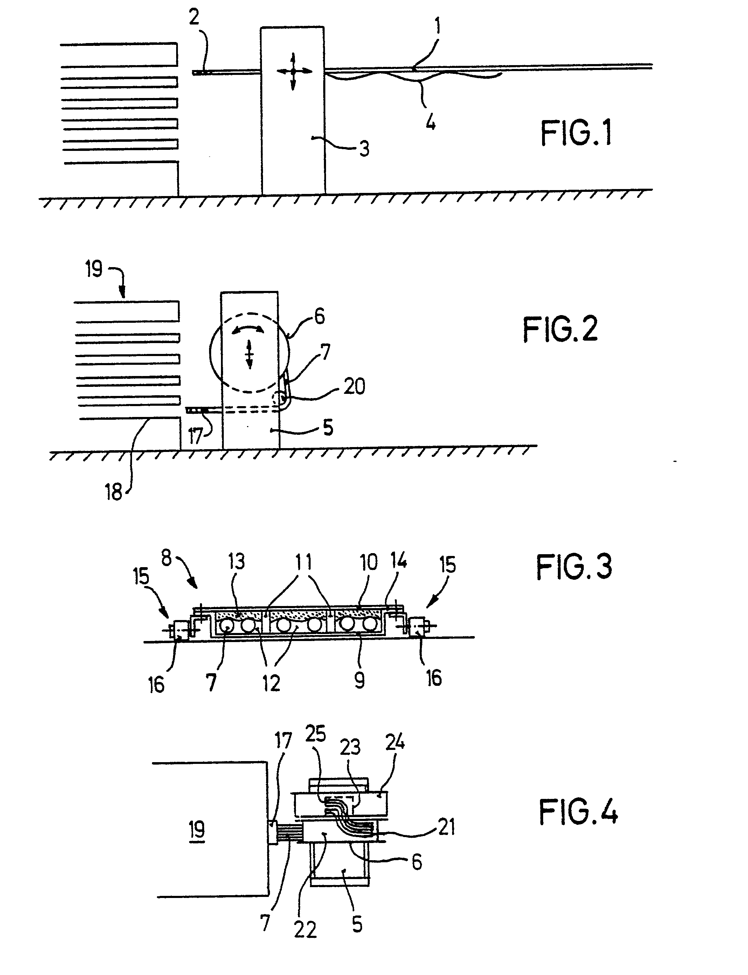

In Figur 1 ist eine vor einer Etagenpresse aufgestellte Vorrichtung zum Ausschäumen von Formen oder Formkörpern nach dem Stand der Technik gezeigt. Darin fällt der lang ausgedehnte, als Lanze sich darstellende Träger 1 für einen Mischkopf 2 auf, der in einem Maschinengestell 3 beweglich gelagert ist und an den Schlauchleitungen 4 für die Kunststoffkomponenten und das Druckmedium entlanggeführt sind.

Nach vorliegender Erfindung ist, wie in Figur 2 zu sehen, der Träger durch eine in einem Maschinengestell 5 drehbar gehaltene Trommel 6 zum Aufrollen der Schlauchleitungen 7 und mehrere in Abständen die Schlauchleitungen zusammenhaltende Klemmstücke 8 (Figur 3) ersetzt. Die Klemmstücke bestehen jeweils aus einem U-förmigen Metall- oder Kunststoffstreifen 9 und einem abschliessenden Jochstreifen 10, so dass ein durch Zwischenstücke 11 unterteilter Aufnahmeraum 12 für die Schlauchleitungen gebildet ist. Zwischen diesen und dem Jochstreifen ist zur sicheren und gleichzeitig schonenden Klemmwirkung eine flexible Kunststoffeinlage 13 eingefügt. Der u-förmige Streifen ist zur Bildung von Befestigungsflächen 14 für den Jochstreifen 10 an beiden Seiten abgewinkelt und an diesen Stellen an Transportketten 15 oder an sonstige geeignete, flexible Stütz- und Transportmittel geschraubt, die beidseitig der Schlauchleitungen 7 verlaufen. Die Transportketten sind mit Laufrollen 16 ausgestattet, so dass die Schlauchleitungen, an denen der eine Düse aufweisende Mischkopf 17 befestigt ist, mittels der auf der Innenseite der unteren Formhälfte bzw. Deckschicht 18 abrollenden Transportketten in die Etagenpresse 19 eingefahren und wieder aus dieser gefahren werden können. Der Antrieb der Transportketten hierfür erfolgt durch im Maschinengestell drehbar gelagerte Kettenräder 20, die mit einem in der Zeichnung nicht zu sehenden Antriebsmotor verbunden sind.

Zur Verbindung der abrollbaren Schlauchleitungen 7 mit den zugehörigen stationären Zuführungsleitungen von den Vorratsbehältern sind die Schlauchleitungen, wie in Figur 4 zu sehen, am trommelseitigen Ende durch Öffnungen 21 im Trommelmantel 22 in eine an der Trommel 6 befestigte Hohlwelle 23 geführt, die in eine neben dieser feststehend angeordnete Trommel 24 ragt und an ihrem Umfang ebenfalls Öffnungen 25 aufweist. Durch diese treten die Schlauchleitungen in das Trommelinnere und werden in einem auf der Hohlwelle aufrollbaren Endabschnitt 26 zu Anschlüssen 27 der Zuführungsleitungen 28 geführt, die am Mantel der feststehenden Trommel angebracht sind. In der praktischen Anwendung wird man die Schlauchleitungen und ihre Endabschnitte trennen und an den Öffnungen 25 der Hohlwelle 23 Anschlüsse für ihre Verbindung vorsehen.

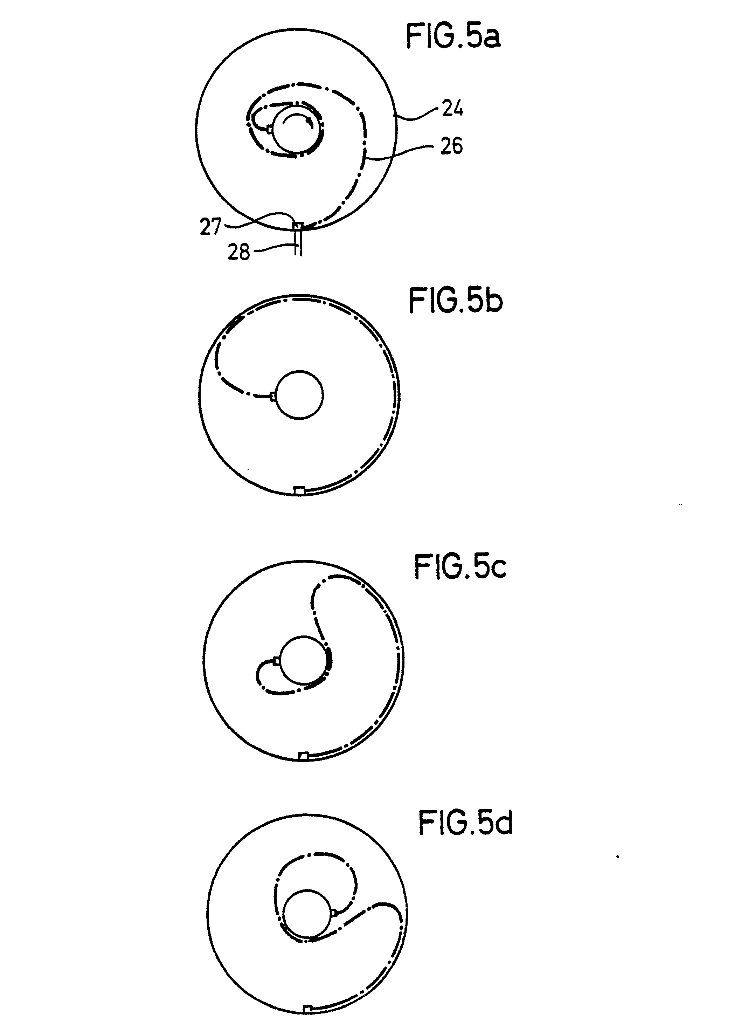

Wie die in Figur 5a–d wiedergegebenen Bewegungsphasen der Hohlwelle 23 beim Abrollbetrieb zum Einfahren des Mischkopfes 17 in die Etagenpresse 19 zeigen, dient die feststehende Trommel 24 als Ausgleichstrommel zwischen den stationären und den bewegten Leitungsabschnitten, d.h. der Übergang von den an der Hohlwelle endenden und mit der Aufrolltrommel 6 bewegten Schlauchleitungen 7 zu den feststehenden Zuführungsleitungen 28 ist durch auf der Hohlwelle aufrollbare Verbindungsleitungen, nämlich die Endabschnitte 26, hergestellt. Dadurch sind aufwendige Drehverbindungen zwischen den bewegten und stationären Leitungen vermieden.

Die feststehende Trommel 24 kann auch innerhalb der Drehbaren Trommel 6 angeordnet sein, wenn für beide eine entsprechende Lagerung vorgesehen wird, beispielsweise seitlich oder eine Lagerung am Umfang der drehbaren Trommel.

Es ist auch möglich, die trommelseitigen Enden der Schlauchleitungen am Trommelumfang festzulegen und die daran angeschlossenen Endabschnitte entlang dem Innenumfang der feststehenden Trommel aufzurollen und dabei zu den Anschlüssen der Zuführungsleitungen zu führen.

Anwendungstechnische Versuche haben gezeigt, dass mit der Vorrichtung nach der Erfindung nur noch etwa ein Sechstel des Platzbedarfs für die Vorrichtungen nach dem Stand der Technik benötigt wird und die Länge der Schlauchleitungen auf etwa die Hälfte reduziert ist.

**Patentansprüche**

1. Vorrichtung zum Ausschäumen von Formen oder Formkörpern, mit einem mittels eines Trägers in diese einführbaren Mischkopf (17), der mit einer Düse versehen ist, einem Maschinengestell (5) zur beweglichen Lagerung des Trägers, der flexible Stütz- und Transportmittel aufweist, für die im Gestell Antriebsräder vorgesehen sind, sowie mit Schlauchleitungen (7) zur Verbindung des Mischkopfes mit einem Anschlussteil (27) von Zuführungsleitungen (28) für die Kunststoffkomponenten und das Druckmedium, dadurch gekennzeichnet, dass die flexiblen Stütz- und Transportmittel beidseitig der Schlauchleitungen (7) verlaufen, dass der Träger durch mehrere in Abständen die Schlauchleitungen (7) zusammenhaltende Klemmstücke (8), die an den flexiblen Stütz- und Transportmitteln befestigt sind, und durch eine im Maschinengestell drehbar gehaltene Trommel (6) zum Aufrollen der Schlauchleitungen gebildet ist, wobei Mittel zur Verbindung zwischen den bewegbaren Schlauchleitungen und den stationären Zuführungsleitungen (28) vorgesehen sind.

2. Vorrichtung nach Anspruch 1, dadurch gekennzeichnet, dass die Stütz- und Transportmittel durch Transportketten (15) gebildet sind, die Laufrollen (16) besitzen und durch im Maschinengestell (5) gelagerte Kettenräder (20) antreibbar sind.

3. Vorrichtung nach Anspruch 1 und 2, dadurch gekennzeichnet, dass koaxial zur drehbaren Trommel (6) eine feststehende Trommel (24) angeordnet ist, in die die Zuführungsleitungen (28) mit einem Anschlussteil (27) münden und in der die daran angeschlossenen Endabschnitte (26) der Schlauchleitungen (7) als Verbindungsmittel aufrollbar sind.

4. Vorrichtung nach Anspruch 3, dadurch gekennzeichnet, dass die Endabschnitte (26) auf den in der feststehenden Trommel (24) befindlichen Teil der mit der drehbaren Trommel (6) festverbundenen Hohlwelle (23) aufrollbar sind und dabei die in die Hohlwelle geführten Schlauchleitungen (7) mit dem Anschlussteil (27) der Zuführungsleitungen (28) verbinden.

5. Vorrichtung nach Anspruch 3, dadurch gekennzeichnet, dass die Endabschnitte (26) der Schlauchleitungen (7) entlang dem Innenumfang der feststehenden Trommel (24) aufrollbar und dabei zum Anschlussteil (27) der Zuführungsleitungen (28) geführt sind.

**Claims**

1. Apparatus for filling molds or moldings with foam, having a mixing head (17) which can be introduced into the said molds or moldings by means of a carrier and is provided with a nozzle, a machine stand (5) for displaceable mounting of the carrier, which has flexible support and transport means, for which drive wheels are provided in the stand, and hoses (7) for connecting the mixing head to a connecting part (27) of feedlines (28) for the plastics components and the pressure medium, wherein the flexible support and transport means run on both sides of the hoses (7), and the carrier is formed by a plurality of clamping pieces (8), which hold the hoses (7) together a distance apart and are fastened to the flexible support and transport means, and by a drum (6) rotatably held in the machine stand, for rolling up the hoses, and means for connecting the mobile hoses to the stationary feedlines (28) are provided.

2. Apparatus as claimed in claim 1, wherein the support and transport means are formed by transport chains (15) which possess rollers (16) and can be driven by chain wheels (20) mounted in the machine stand (5).

3. Apparatus as claimed in claims 1 and 2, wherein coaxially to the rotatable drum (6) a fixed drum (24) is arranged, in which the feedlines (28) end in a connection part (27) and in which the end sections (26) of the hoses (7), which are connected to the said connection part, as connecting means, can be rolled up.

4. Apparatus as claimed in claim 3, wherein the end sections (26) can be wound on that part of the hollow shaft (23) which is present in the fixed drum (24), the said hollow shaft being firmly connected to the rotatable drum (6), and thus connect the hoses (7) fed into the hollow shaft to the connection part (27) of the feedlines (28).

5. Apparatus as claimed in claim 3, wherein the end sections (26) of the hoses (7) can be rolled up along the inner circumference of the fixed drum (24) and are thus fed to the connection part (27) of the feedlines (28).

## Revendications

1. Dispositif pour remplir de mousse, ou produit alvéolaire, des moules ou des corps moulés, comportant une tête de mélange (17), munie d'une buse, qui peut être introduite dans ceux-ci au moyen d'un support, un bâti de machine (5) pour le montage mobile du support, qui possède des moyens flexibles d'appui et de transport, pour lesquels sont prévus des roues d'entraînement dans le bâti, et également des conduites flexibles (7) pour relier la tête de mélange à une pièce de raccordement (27) de conduits d'amenée (28) des composants de matière plastique et du fluide sous pression, caractérisé par le fait que les moyens flexibles d'appui et de transport passent des deux côtés des conduits flexibles (7), que le support est formé par plusieurs pièces de serrage (8) fixées aux moyens d'appui et de transport flexible et maintenant ensemble, écartés, les conduits flexibles (7), et par un tambour (6), monté tournant dans le bâti de machine, pour enrouler les conduits flexibles, des moyens étant prévus pour relier les conduits flexibles déplaçables et conduits d'amenée (28) stationnaires.

2. Dispositif selon la revendication 1, caractérisé par le fait que les moyens d'appui et de transport sont formés par des chaînes transporteuses (15) qui possèdent des galets de roulement (16) et sont entraînables par des roues de chaîne (20) montées dans le bâti de machine (5).

3. Dispositif selon les revendications 1 et 2, caractérisé par le fait qu'il est monté coaxialement au tambour tournant (6) un tambour fixe (24) dans lequel débouchent, par une pièce de raccordement (27), les conduits d'amenée (28) et dans lequel sont enroulables, en tant que moyens de liaison, les sections d'extrémité (26) des conduits flexibles (7), raccordées à ladite pièce de raccordement (27).

4. Dispositif selon la revendication 3, caractérisé par le fait que les sections d'extrémité (26) sont enroulables sur la partie, située dans le tambour fixe (24), de l'arbre creux (23) relié solidement au tambour tournant (6) et ainsi les conduits flexibles (7) anemés dans l'arbre creux sont reliés à la partie de raccordement (27) des conduits d'amenée (28).

5. Dispositif selon la revendication 3, caractérisé par le fait que les sections d'extrémité (26) des conduits flexibles (7) sont enroulables le long de la périphérie interne du tambour fixe (24) et sont ainsi amenées à la pièce de raccordement (27) des conduits d'amenée (28).

FIG.1

FIG.2

FIG.3

FIG.4

FIG.5a

FIG.5b

FIG.5c

FIG.5d